(19) **Europäisches Patentamt**
**European Patent Office**
**Office européen des brevets**

(11) **EP 2 550 141 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(21) Anmeldenummer: **11716170.3**

(22) Anmeldetag: **24.03.2011**

(51) Int Cl.:
*B29B 7/48* (2006.01)    *B29C 47/40* (2006.01)
*B29C 47/42* (2006.01)    *B29C 47/64* (2006.01)

(86) Internationale Anmeldenummer:
**PCT/EP2011/001477**

(87) Internationale Veröffentlichungsnummer:
**WO 2011/116965 (29.09.2011 Gazette 2011/39)**

(54) **EXTRUDER**

EXTRUDER

EXTRUDEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2010 AT 4682010**

(43) Veröffentlichungstag der Anmeldung:
**30.01.2013 Patentblatt 2013/05**

(73) Patentinhaber: **Blach Verwaltungs GmbH & Co. KG 74348 Lauffen a.N. (DE)**

(72) Erfinder: **Blach, Josef 6632 Ehrwald (AT)**

(74) Vertreter: **LS-MP von Puttkamer Berngruber Loth Spuhler Partnerschaft von Patent- und Rechtsanwälten mbB ALPHA-Haus Garmischer Strasse 35 81373 München (DE)**

(56) Entgegenhaltungen:
**WO-A1-2011/006516      CA-A1- 2 728 438**
**DE-A1-102008 016 862   US-A- 4 300 839**
**US-A- 4 824 256          US-A1- 2005 041 521**

**Beschreibung**

Die Erfindung bezieht sich auf einen Extruder nach dem Oberbegriff des Anspruchs 1.

Gleichsinnig drehende Schneckenwellen, die in einem Extruder optimal mit zweigängigen Förderelementen besetzt sein können, werden zum kontinuierlichen Fördern, Mischen, Dispergieren und Extrudieren insbesondere von Kunststoffen sowie in der kontinuierlichen mechanischen Verfahrenstechnik verwendet. Die Verarbeitung möglichst vieler Produkte mit einer Schneckenkonfiguration ohne Qualitätseinschränkungen, Zwischenreinigung und Maschinenstillstand ist wirtschaftlich von großer Bedeutung. So besteht zwischen dem Verweilzeitverhalten des Produktes im System und dem Stoffaustausch und der Selbstreinigung im Verfahrensraum ein enger Zusammenhang. Ein großes Prozessfenster steht für eine vielfältige Nutzung und Produktvielfalt.

Seit langem sind Doppelschnecken mit einem modularen Förderelementsystem bekannt. Bei der geometrischen Auslegung dicht kämmender Fördersysteme ist nach dem Stand der Technik zwischen dem Kerndurchmesser des Förderelements und dem Kamm des damit kämmenden Förderelements ein Spiel von 1,0 % der Gehäusebohrung und zwischen Kamm und Bohrung ein Spiel von 2 bis 10 % üblich. Bei ungünstigen Verhältnissen vorzüglich bei größeren Durchmessern und/oder Produkten mit sehr unterschiedlicher Teilchengröße wird nach DE 10 2008 029 305 A1 mittels einer Profilkorrektur der Kammwinkel verkleinert, um den spezifischen Energieeintrag und damit partielle Produktschädigungen sowie die Gefahr eines Maschinenschadens zu reduzieren.

Aus DE 10 2004 010 553 A1 ist bereits ein Extruder nach dem Oberbegriff des Anspruchs 1 bekannt, der durch das erhöhte Spiel zwischen der Gehäusebohrung und dem Kamm der Förderwellen Insbesondere für empfindliche Stoffe und/oder hohe Wellendrehzahlen geeignet ist. Da die Gehäusebohrungen nicht abgeschabt werden können, ist der Einsatzbereich des bekannten Extruders jedoch sowohl bei Schnecken als auch bei Knetblöcken begrenzt.

Aus der DE 10 2008 016862 A1 ist ein Extruder gemäß dem Oberbegriff des Anspruchs 1 bekannt, der wenigstens zwei gleichsinnig antreibbare achsparallele Wellen aufweist und darüber hinaus wenigstens zwei gängige Förderelemente umfasst, die sich an einer Stelle (C) im Wesentlichen dicht berühren.

Ein Kamm des ersten Gangs berührt die Innenwand des Gehäuses im Wesentlichen dicht. Zwischen dem Kamm des wenigstens einen weiteren Ganges und der Innenwand des Gehäuses besteht ein vorbestimmter Abstand. Das Förderelement besteht aus wenigstens im Winkel zueinander versetzten Förderabschnitten, wobei jeder Förderabschnitt eine achsiale Länge aufweist, die höchstens dem Außendurchmesser (Da) des Förderelements entspricht.

Die US 4 824 256 A betrifft einen co-rotierenden Doppelschneckenextruder, der ein Gehäuse aufweist, das zwei achsparallele Bohrungen umfasst.

Die Bohrungen werden durch sich schneidende Gehäusewände definiert. Der Schnittpunkt der Gehäusewände bildet einen Zwickel in der Gehäusewand, der an den Schnittpunkt der Wände angrenzt.

Zwei achsparallele Extruderwellen sind gleichsinnig drehbar.

Jeder Schaft ist dabei in einer separaten Bohrung angeordnet und weist eine Vielzahl von Knetscheiben auf. Die Knetscheiben umfassen Kämme, die der Gehäusewand zugeordnet sind und zumindest auf einem Teil der Länge jeder Extruderwelle angeordnet sind.

Die CA 2 728 438 A1 offenbart ein Schneckenelement für Mehrschneckenextruder mit Paaren von co-rotierenden vollständig kämmenden Extruderwellen. Jede Extruderwelle weist zwei oder mehrere Extruderkämme auf.

Die Schneckenprofile weisen im Querschnitt sich kontinuierlich unterscheidende Profilkonturen auf.

Die US 2005/041521 A1 betrifft eine schraubenartige Extrusionsmaschine, die mindestens zwei parallele sich schneidende Gehäusebohrungen umfasst. Die Extrusionsmaschine weist darüber hinaus drehbar antreibbare Schneckenwellen auf, die in den Gehäusebohrungen angeordnet sind.

Eine Vielzahl vom Misch- und Knetscheiben sind hintereinander auf den Extruderwellen angeordnet und kommunizieren paarweise miteinander.

Aufgabe der Erfindung ist es, die Produktqualität zu verbessern und Lastspitzen des Drehmomentes an den Tragwellen herabzusetzen und damit die Wirtschaftlichkeit des Extruders entscheidend zu verbessern.

Dies wird erfindungsgemäß mit dem im Anspruch 1 gekennzeichneten Extruder erreicht. In den Unteransprüchen sind vorteilhafte Ausgestaltungen des erfindungsgemäßen Extruders wiedergegeben.

Der erfindungsgemäße Extruder weist wenigstens zwei beispielsweise zweigängige Förderwellen auf, die einen sich gegenseitig exakt abstreifenden Förderquerschnitt aufweisen, d. h. ein Spiel, mit dem im Wesentlichen lediglich Fertigungstoleranzen ausgeglichen werden.

Für die Schnecken eines Doppelschneckenextruders, die eine die Bohrungswand exakt abschabende Geometrie aufweisen, gilt nach dem Buch "Der gleichläufige Doppelschneckenextruder" von Klemens Kohlgrüber, Carl Hanser Verlag, München 2007, Seite 102 die Formel

$$A/D \geq \cos\left(\frac{90}{Z}\right),$$

worin

A der Abstand der Achsen der beiden Bohrungen, D der Bohrungsdurchmesser und Z die Gangzahl ist, also bei zweigängigen Schnecken mit einer das Querschnittsprofil der Schneckenwellen und die Bohrungswand exakt abschabenden Geometrie ist A/D ≥ cos45° ≥ 0,707. Das heißt, der Abstand A der Achsen der beiden Bohrungen ist größer als D/1,4142.

Jede Förderwelle weist wenigstens zwei benachbarte Förderabschnitte auf. Dabei beträgt der Verdrehwinkel von einem Förderabschnitt der wenigstens zwei Förderabschnitte zum benachbarten Förderabschnitt 180°, d.h. die wenigstens zwei benachbarten Förderabschnitte der jeweiligen Förderwelle sind um 180° verdreht zueinander angeordnet.

Die Förderquerschnitte der Förderwellenabschnitte, die sich jeweils gegenseitig abstreifen, sind um 360°/n verdreht angeordnet, wobei n die Gangzahl ist.

Der erfindungsgemäße Extruder kann, wie üblich, zylindrische Bohrungen mit parallelen Achsen aufweisen. Die Erfindung bezieht sich jedoch auch auf Extruder mit konischen Bohrungen, die im Winkel zueinander verlaufende Achsen aufweisen.

Dabei ist der Mittelpunkt des Querschnittprofils jedes Förderabschnitts gegenüber dem Mittelpunkt der Gehäusebohrung und dem Drehmittelpunkt der Förderwelle jeweils exzentrisch versetzt angeordnet. Der Mittelpunkt des Querschnittsprofils jedes Förderabschnitts wird durch den Schnittpunkt der beiden Spiegelebenen des Querschnittsprofils des Förderabschnitts gebildet.

Die Exzentrizität, um die der Mittelpunkt des Querschnittsprofils der Förderabschnitte gegenüber dem Mittelpunkt der Gehäusebohrung und dem Drehmittelpunkt der Förderwellen versetzt Ist, Ist maximal (D-A)/4.

Vorzugsweise ist der Mittelpunkt des Querschnittprofils der Förderabschnitte gegenüber den beiden Spiegelebenen des Querschnittsprofils jeweils um 45° versetzt, da bei diesem Winkel alle Bohrungen in jeder Winkellage der Wellen abgestreift werden.

Damit weist bei einer zweigängigen Förderwelle ein Kamm jedes der Förderabschnitte ein der Exzentrizität entsprechendes Spiel von der Gehäusebohrung auf, während sich der zweite Kamm der Förderwelle an der Gehäusebohrung ständig abstreift. Damit werden sowohl die Gehäusebohrungen als auch das Förderprofil der Schneckenwellen am ganzen Umfang abgestreift.

Durch die zwischen dem Gehäusebohrungsdurchmesser und dem Außendurchmesser der Förderwelle freie Wahl der Exzentrizität und damit der Schichtdicke wird die Gangtiefe entsprechend geringer.

Durch die durch den Spalt zwischen der Förderwelle und der Gehäusebohrung verringerte Förderwirkung erhöht sich der Füllgrad sowie der Stoffaustausch, während sich gleichzeitig die partielle Stoffbeanspruchung verringert.

Erfindungsgemäß streift sich damit der Kamm des einen Förderabschnitts der jeweiligen Förderwelle an der Bohrungswand ab, während zwischen dem benachbarten Kamm des benachbarten Förderabschnitts der betreffenden Förderwelle ein Spelt gebildet wird. Dadurch wird die Fließrichtung des Produkts gestört. Das heißt, das Material, das sich an dem an der Bohrungswand abstreifenden Kamm staut, kann in den Bereich des Spalts abfließen, den der benachbarte Kamm des benachbarten Förderabschnitts dieser Förderwelle bildet.

Die beiden benachbarten Förderabschnitte werden jeweils durch zwei Teilscheiben einer Kurvenscheibe gebildet, wobei beide Teilscheiben jeder Kurvenscheibe gegenübereinander um 180° verdreht angeordnet sind.

Mit dem erfindungsgemäßen Extruder werden ausgeglichene dynamische Verhältnisse der Förderwellen erreicht, die von großer Bedeutung sind, da eine gleichförmige Belastung als Basis für die technische Auslegung der Tragwellen und das Getriebe dient und für einen wirtschaftlichen Dauerbetrieb Voraussetzung ist. Messungen des Drehmoments an den Tragwellen mit einer Millisekunden-Auflösung haben ergeben, dass weder weitergehende technische noch technologische Ansprüche von üblichen Knetblöcken nicht mehr zu erfüllen sind. Während der technische Anspruch eine Überlast von 10 % bei einer maximal zulässigen Dauerbelastung der Wellen schon sehr kritisch betrachtet werden muss, können Knetblöcke mehrfach eine um 30 % schwellende Last bei jeder Umdrehung verursachen. Um alleine Dauerbrüche der Wellen auf jeden Fall zu vermeiden, kann die Maschinenleistung nicht voll genutzt werden. Schon bei einem Profilumschlag um 180° der Einzelscheiben in Knetblöcken kann bei geringeren Schwelllasten ein besseres Produkt erreicht werden, und der 180°-Umschlag im kontinuierlichen Verlauf eines Schneckengewindes angewandt, bringt bei einer besseren Produktmischung die geringsten Schwankungen der Schwelllast.

Vorzugsweise entspricht die Länge jedes Förderabschnitts oder jeder Teilscheibe in axialer Richtung maximal dem Bohrungsdurchmesser, insbesondere maximal der Hälfte des Bohrungsdurchmessers.

Jede Förderwelle und das wenigstens eine erfindungsgemäße Förderelement, das sie trägt, kann ein einziges Bauteil bilden. Durch die einstückige Ausbildung von Welle und Förderelement kann ein wesentlich höheres Drehmoment übertragen werden. Beispielsweise kann die Welle, einschließlich der Antriebswelle, sowie das Förderelement im Bereich der Einfüllzone, einschließlich der Aufschmelzzone aus einem einzigen Bauteil bestehen.

Erfindungsgemäß erfolgt ein wiederholter Profilumschlag, der dem axialen Durchfluss des Produkts einen zusätzlichen Widerstand bietet. Das heißt, es erfolgt eine Änderung der Gangtiefe im gesamten freien Querschnitt, wodurch das gesamte Produkt und der Extruder gleichmäßig höher beansprucht werden.

Dabei können die Kämme der Förderwellen zu den Achsen der Bohrungen senkrecht verlaufen oder schräg als Schnecken ausgeführt sein.

Die Förderwellen weisen vorzugsweise zwischen zwei Förderabschnitten zur Bohrungsachse konzentrische Barriereringe auf, deren Durchmesser maximal dem Achsabstand entspricht. Damit kann der Stofffluss in axialer Richtung verlangsamt und die Dispergierwirkung erhöht werden. Dabei können die Barriereringe in unterschiedlichen Abständen zwischen den Förderabschnitten angeordnet sein.

Die Förderabschnitte können auch durch Abschnitte eines einstückigen Förderelements gebildet werden, das beispielsweise durch Fräsen eines Metallstücks erhalten wird.

Mit dem erfindungsgemäßen Extruder werden über die Viskosität der kontinuierlichen Phase wiederholt Zug- und Biegekräfte auf darin enthaltene Feststoffagglomerate ausgeübt, was deren Dauerbruch zur Folge hat. Erfindungsgemäß wird daher eine effektive Homogenisierung und Dispergierung des Feststoffs erzielt, und zwar selbst bei Feststoffteilchen mit einer Teilchengröße von weniger als 100 $\mu$, insbesondere weniger als 10 $\mu$. Mit dem erfindungsgemäßen Extruder wird das Produkt also auf kurzer Länge ständig einer anderen Fließrichtung und Geschwindigkeit und damit Dehnungsvorgängen ausgesetzt.

Erfindungsgemäß wird durch den großen Abstand des einen Kamms der Förderabschnitte von der Gehäusebohrung ein großer Stoffaustausch erzielt, während an dem Kamm, der sich an der Wand der Gehäusebohrung abstreift, nur ein geringer Stoffaustausch erfolgt, jedoch dort durch höchste Beanspruchung des Produkts die höchste Dispergierwirkung erreicht werden kann, ebenso wie durch die sich gegenseitig exakt abstreifenden Förderquerschnitte der beiden Förderwellen. Durch die sich jeweils gegenseitig abstreifenden Förderabschnitte, die bei einer zweigängigen Förderwelle um 180° verdreht an der einen bzw. anderen Förderwelle angeordnet sind, erfährt das Produkt nur in kleinen Bereichen eine extreme Beanspruchung, wodurch die Temperatur des Produktes insgesamt niedrig gehalten werden kann, sodass das Produkt auch in den extrem beanspruchten Bereichen nicht geschädigt und damit insgesamt schonend behandelt wird. Der erfindungsgemäße Extruder ist damit insbesondere auch zur Bearbeitung empfindlicher Produkte geeignet, beispielsweise zur Aufarbeitung von Polyethylenterephthalat (PET).

Nach einer bevorzugten Ausführungsform weist der Extruder mindestens sechs längs eines Kreises mit gleichem Zentriwinkelabstand angeordnete Förderwellen auf, die sich jeweils an den beiden benachbarten Förderwellen abstreifen. Dadurch wird das vakuum mit besonders hohe Dichte an den Strömungen verdoppelt. Da dies ohne Spitzenbelastungen und damit ohne unerwünschten Viskositätsabfall über die gesamte Länge der Förderwellen erfolgt, erreicht man eine effektivere, schnelle Mischung und bei gleichmäßiger Homogenisierung eine noch wesentlich höhere Produktqualirät und höhere Durchsätze.

Falls bei dieser Ausführungsform die Förderquerschnitte der Förderwellen durch Förderabschnitte gebildet werden, bei denen bei einer zweigängigen Förderwelle die sich gegenseitig abstrelfenden Förderabschnitte um 180° verdreht angeordnet sind, wird der Profilumschlag, also die sprunghafte Änderung der Gangtiefe in axialer Richtung zweier benachbarter Wellen verdoppelt und damit wesentlich erhöht.

Nachstehend ist die Erfindung anhand der beigefügten Zeichnung beispielhaft näher erläutert. Darin zeigen:

Figur 1 einen Querschnitt durch zwei miteinander kämmende Förderelemente eines bekannten Zwei-Wellen-Extruders und zwar nach DE 10 2004 010 553 A1;

Figur 2 und 3 jeweils einen Querschnitt durch zwei miteinander kämmende, exzentrisch angeordnete Förderelemente eines Zwei-Wellen-Extruders;

Figur 4 im Querschnitt die beiden miteinander kämmenden Förderelemente nach Figur 3, und zwar in Figur 4(a) bzw. 5(a) in der Drehstellung 0°, 45°, 90°, usw.;

Figur 5, 6 und 7 eine perspektivische Ansicht, eine Seitenansicht bzw. einen Querschnitt von zwei miteinander kämmenden zweigängigen Förderelementen mit Schneckenabschnitten und Barriereringen nach der Erfindung;

Figur 8 eine Seitenansicht eines der beiden Förderelemente nach Figur 5 bis 7;

Figur 9(a) bis 9(d) jeweils einen Schnitt durch die beiden miteinander kämmenden Förderelemente nach Figur 5 bis 7 entlang der Linie A-A, B-B, C-C und D-D in Figur 8;

Figur 10, 11 und 12 eine perspektivische Ansicht, eine Seitenansicht bzw. einen Querschnitt von zwei miteinander kämmenden zweigängigen Knetblöcken mit Barriereringen;

Figur 13 eine Seitenansicht eines der beiden Förderelemente nach Figur 10 bis 12;

Figur 14(a) bis (d) jeweils einen Schnitt durch die beiden miteinander kämmenden Förderelemente nach Figur 20 bis 12 entlang der Linie A-A, B-B, C-C und D-D in Figur 13;

Figur 15 bis 17 eine perspektivische Ansicht, eine Seitenansicht bzw. einen Querschnitt von zwei miteinander kämmenden zweigängigen Knetblöcken nach einer weiteren Ausführungsform;

Figur 18 eine Seitenansicht eines der beiden Knetblöcke nach Figur 15 bis 17;

Figur 19(a) und (b) jeweils einen Schnitt durch die beiden Knetblöcke nach Figur 15 bis 17 entlang der Linie B-B und C-C in Figur 18; und

Figur 20(a) bis (f) jeweils einen Querschnitt durch einen Mehr-Wellen-Extruder mit längs eines Kreises mit gleichem Zentriwinkelabstand angeordneten Förderwellen in der Ausgangsstellung 0° nach Figur 20(a) und jeweils um 60°, 120°, 180°, 240° und 300° gedreht.

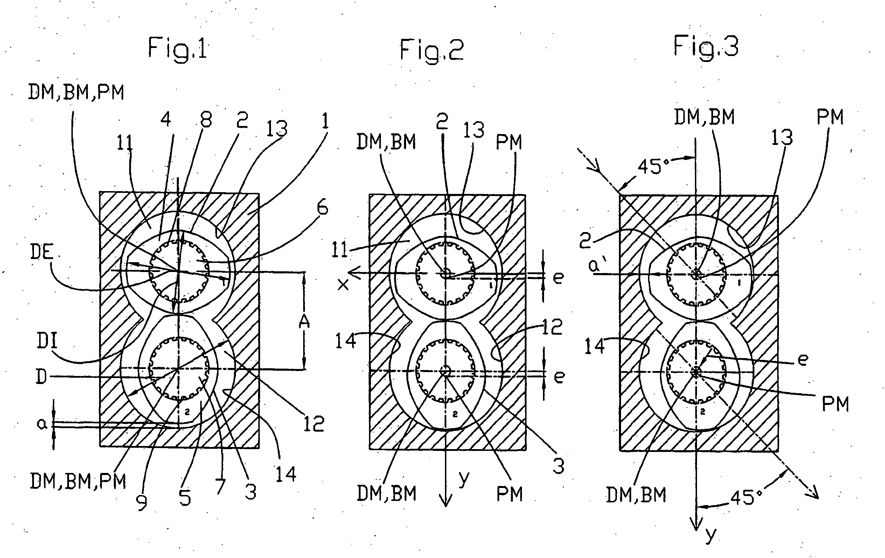

Gemäß Figur 1 weist ein Zwei-Wellen-Extruder in einem Gehäuse 1 zwei zweigängige Förderwellen 2, 3 auf, die aus Förderelementen 4, 5 bestehen, die jeweils auf einer Tragwelle 6, 7 beispielsweise durch eine Keilverzahnung 8, 9 drehfest angeordnet sind.

Die Förderwellen 2, 3 sind in zwei Gehäusebohrungen 11, 12 gleichsinnig antreibbar angeordnet, wobei die Bohrungswand 13 bzw. 14 der Bohrungen 11, 12 zu der Drehachse der Förderwellen 2, 3, die durch den Mittelpunkt BM der Gehäusebohrung 11, 12 und den Drehmittelpunkt DM der Förderwelle 2, 3, verläuft, konzentrisch ist.

Dabei können die Bohrungen 11, 12 zylindrisch oder konisch ausgebildet sein, wobei bei zylindrischen Bohrungen 11, 12 die Drehachsen parallel und im Fall konischer Bohrungen im Winkel zueinander verlaufen.

Die Gehäusebohrungen 11, 12 weisen einen Durchmesser D auf. Der Achsabstand A, also der Abstand der Mittelpunkte BM der beiden Gehäusebohrungen 11, 12 ist größer als D/1,4142. Die Förderelemente 4, 5 und damit die Förderwellen 2, 3 weisen im Querschnitt einen Außendurchmesser DE > D mit der zweigängigen spiegelsymmetrischen Profilkontur, die sich aus A und DE ergibt, sowie eine Gangtiefe GE = DE-A und einen Innendurchmesser DI auf, der DE - 2GE entspricht. Die Förderwellen 3, 3 nach Figur 1 sind zentrisch angeordnet. Damit fällt der Mittelpunkt PM des Querschnittsprofils der Förderwellen 2, 3 mit DM und BM zusammen. Zwischen der Bohrungswand 13, 14 und dem Querschnittsprofil der Förderwellen 2, 3 besteht ein vorgegebenes Spiel a. Dadurch schaben sich die Förderprofile zwar gegenseitig ab, jedoch wird die Oberfläche der Gehäusebohrungen 11, 12 nicht abgeschabt.

Im Gegensatz zu dem bekannten Extruder nach Figur 1 ist nach Figur 2 und 3 der Mittelpunkt PM des Querschnittprofils der Förderwellen 2, 3 gegenüber dem Mittelpunkt BM der Gehäusebohrung 11, 12 und dem Drehmittelpunkt DM der Förderwelle 2, 3 jeweils um "e" exzentrisch versetzt angeordnet. Dabei wird der Mittelpunkt PM des Querschnittprofils jeder Förderwelle 2, 3 durch den Schnittpunkt der beiden Spiegelebenen x, y des Querschnittprofils der jeweiligen Förderwelle 2, 3 gebildet.

Die Exzentrizität e, um die der Mittelpunkt PM des Querschnittprofils der Förderwellen 2, 3 gegenüber dem Mittelpunkt BM der Gehäusebohrung 11, 12 und dem Drehmittelpunkt DM der Förderwelle 2, 3 jeweils versetzt ist, beträgt maximal (D-A)/4.

Nach Figur 2 sind die Querschnittsprofile der beiden Förderwellen 2, 3 mit dem Mittelpunkt PM um (D-DE)/2 = e exzentrisch in Richtung der durch y-Koordinate wiedergegebenen Spiegelebene bei unveränderter Lage des Drehmittelpunkts DM der Förderwelle 2, 3 und des Mittelpunktes BM der Gehäusebohrung 11, 12 positioniert. Dadurch wird die eine Gehäusebohrung 12 ständig optimal gereinigt.

Die Exzentrizität e kann, wie durch den Kreis um DM und BM veranschaulicht, eine beliebige Richtung einnehmen.

In Figur 3 ist der Mittelpunkt PM des Querschnittsprofils beider Förderwellen 2, 3 um "e" exzentrisch äquidistant um 45° gegenüber beiden Spiegelebenen x, y versetzt.

Damit werden sowohl die beiden Förderprofile gegenseitig am ganzen Umfang abgestreift als auch die Gehäusebohrungen 11, 12, jeweils in gleicher Weise.

Durch die in Grenzen von D und DE freie Wahl der Exzentrizität e und damit der Schichtdicke wird gleichzeitig die Gangtiefe GE entsprechend unterschiedlich.

Während gemäß Figur 3, wie anhand der Förderwelle 2 ersichtlich, der eine Kamm der zweigängigen Förderwelle 2, 3 die Bohrungswand 13 bzw. 14 abschabt, weist der andere Kamm den Abstand a' von der Bohrungswand 13, 14 auf. Der dadurch gebildete Spalt verringert zwar die Förderwirkung, jedoch wird dadurch der Füllgrad sowie der Stoffaustausch erhöht und gleichzeitig die partielle Stoffbeanspruchung herabgesetzt. Somit verbessert sich die Mischwirkung quer zu den Drehachsen und die Dispergierwirkung wird erhöht.

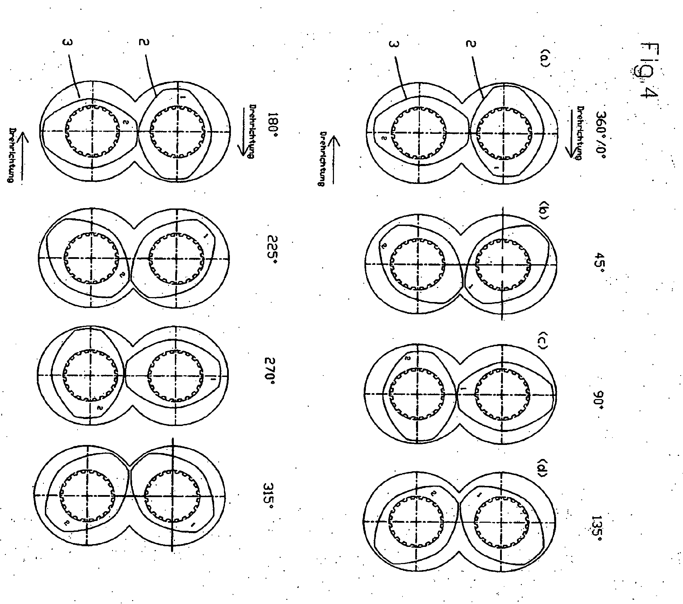

In Figur 4 sind acht unterschiedliche Drehpositionen der beiden Förderwellen 4, 5 dargestellt. Die Schichtdicke zwischen den Kämmen der Förderwellen 2, 3 und der Bohrungswand 13, 14 beträgt maximal D-DI. Mit unterschiedlichen Exzentrizitäten e und/oder Winkeln der Exzentrizität E zu den beiden Spiegelebenen oder Hauptkoordinaten x, y sind vielfache Schichtdicken einstellbar.

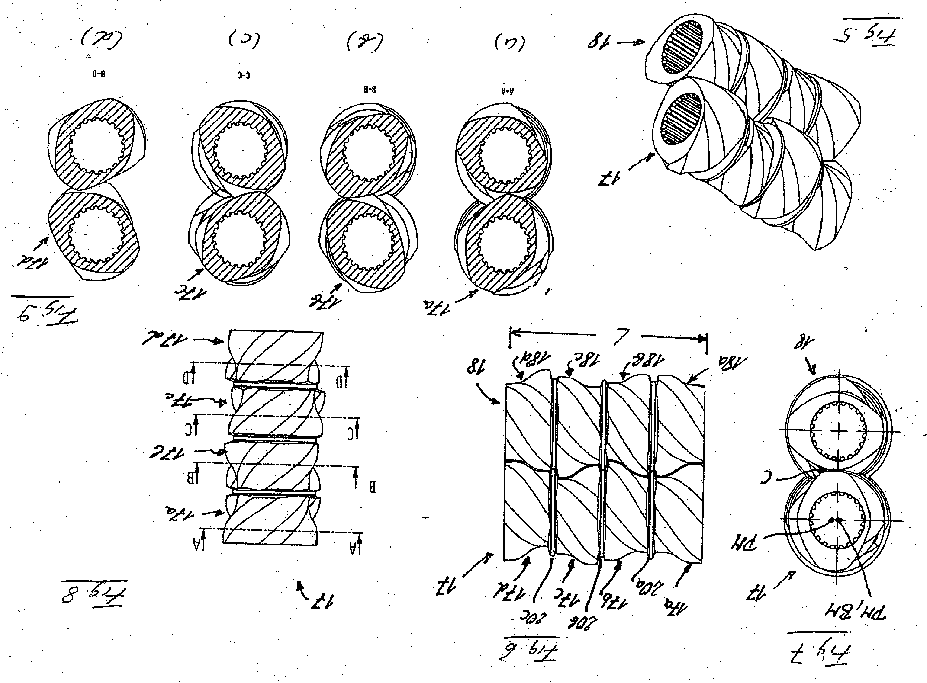

Gemäß Figur 5, 6, 7 sowie Figur 9(a) bis (d) ist der Zwei-Wellen-Extruder mit einstückigen Förderelementen 17, 18 bestückt, die jeweils eine Länge L von beispielsweise 2,5 bis 4D aufweisen und aus Förderabschnitten 17a bis 17d und 18a bis 18d bestehen. Die Förderabschnitte 17a bis d und 18a bis d jedes Förderelements 17, 18 sind in Stufen fortschreitend um den gleichen Winkel beispielsweise 90° gegenüber einander versetzt angeordnet. Jeder Förderabschnitt 17a bis d und 18a bis d ist als zweigängige Schnecke ausgebildet. Dabei berühren sich die miteinander kämmenden Förderabschnitte an einer Stelle C im Wesentlichen dicht, d. h. mit einem geringen Spiel von beispielsweise weniger als 1 mm, wie aus Figur 7 und 9a bis d ersichtlich. Die Förderabschnitte 17a bis d und 18a bis d jedes Förderelements 17, 18 weisen ein Querschnittsprofil auf, dessen Mittelpunkt PM gegenüber dem Mittelpunkt BM der Gehäusebohrung 11, 12 und dem Drehmittelpunkt DM der Förderwelle 2, 3 jeweils in gleicher Weise exzentrisch versetzt angeordnet ist, wie vorstehend im Zusammenhang mit Figur 2 bis 4 beschrieben.

Zwischen zwei Förderabschnitten 17a bis d und 18a bis d der Förderelemente 17 und 18 sind jeweils zur Drehachse konzentrische Barriereringe 20a bis c vorgesehen.

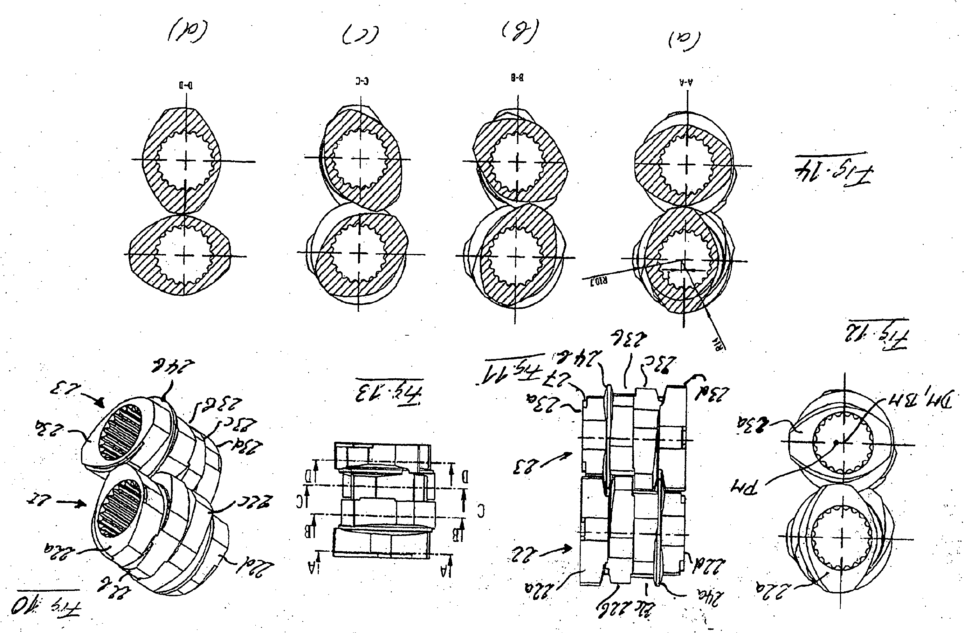

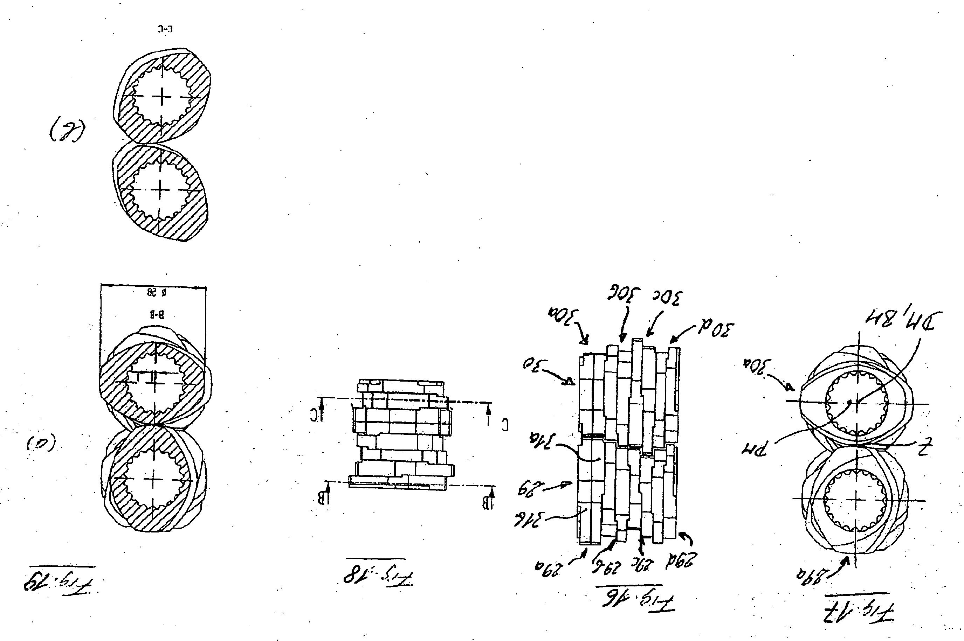

Während sich die Ausführungsform nach Figur 5 bis 9 auf Förderelemente mit Schneckenabschnitten mit endlicher Steigung bezieht, sind nach Figur 10 bis 20 Förderelemente mit Schneckenabschnitten unendlicher Steigung vorgesehen, um miteinander kämmende Knetblöcke 22, 23 zu bilden, wie aus Figur 10 bis 14 ersichtlich, um einen hohen spezifischen Energieeintrag zu erreichen.

Dabei besteht jeder Knetblock 22 und 23, wie aus Figur 10 bis 14 ersichtlich, aus Kurvenscheiben 22a bis d und 23a bis d. Dabei sind bei der Ausführungsform nach Figur 10 bis 14 zwischen zwei Kurvenscheiben 22a bis c bzw. 23a bis d zu der Drehachse der Förderwelle jeweils zur Drehachse konzentrische Barriereringe 24a, 24b vorgesehen.

Die Kurvenscheiben 22a bis d und 23a bis d weisen ein zu den Förderwellen senkrechtes Querschnittsprofil auf, dessen Mittelpunkt PM in gleicher Weise gegenüber dem Mittelpunkt BM der Förderwellen und dem Mittelpunkt BM der Gehäusebohrung exzentrisch versetzt ist, wie vorstehend im Zusammenhang mit Figur 2, 3 und 4 beschrieben. Das heißt, jede Kurvenscheibe weist zwei Kämme auf, wobei sich einer der beiden Kämme jeder Kurvenscheibe an der Bohrungswand der Gehäusebohrung dicht abstreift, während der andere Kamm aufgrund der Exzentrizität der Kurvenscheibe mit einem Spiel im Abstand von der Bohrungswand angeordnet ist.

Dabei werden ebenfalls Gänge gebildet, die eine Förderwirkung hervorrufen.

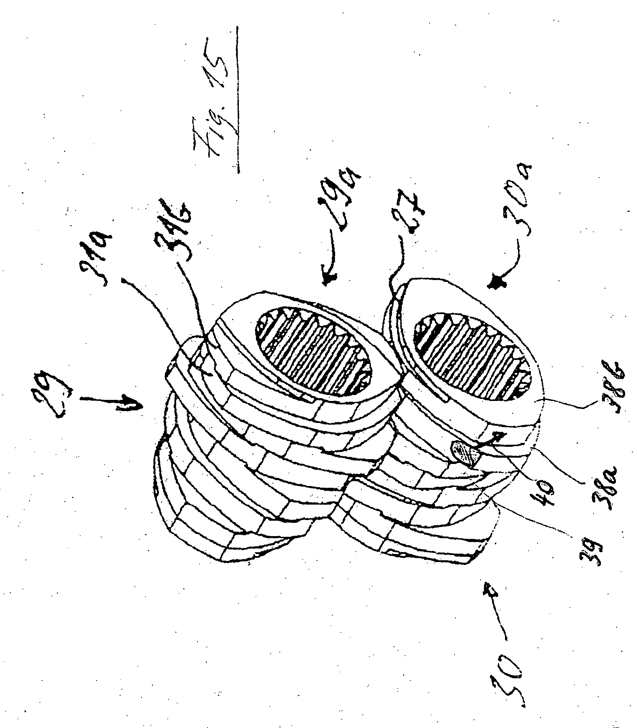

Die Knetblöcke 22 und 23 weisen an ihren Stirnseiten Freisparungen 27 auf, um ein Auflaufen benachbarter Knetblöcke aufgrund von Toleranzen zu verhindern. Gemäß Figur 15 bis 19 besteht jede Kurvenscheibe 29a bis d und 30a bis d der Knetblöcke 29, 30 aus zwei gegenüber einander um 180° verdrehten Teilscheiben, wie durch die Teilscheiben 31a und 31b der Kurvenscheibe 29a veranschaulicht.

Die miteinander kämmenden Kurvenblöcke 22, 23 sowie 29 und 30 sind in gleicher Weise exzentrisch versetzt, wie vorstehend anhand der Figuren 2 bis 4 im Einzelnen erläutert, und anhand von PM gegenüber DM und BM dargestellt.

Durch die im Winkel versetzten Förderabschnitte 17a bis 17d und 18a bis 18d der Ausführungsform nach Figur 5 bis 9, die im Winkel versetzten Kurvenscheiben 22a bis 22d und 23a bis 23d der Ausführungsform nach Figur 10 bis 14 erfolgt in Längsrichtung der Förderwellen ein wiederholter Profilumschlag um 180°, der den axialen Durchfluss einen zusätzlichen Widerstand bietet und besonders im Bereich der Umlenkung in den Zwickeln Z besonders wirksam ist.

Wie insbesondere aus Figur 15 ersichtlich, ist von den beiden benachbarten Teilscheiben 31a, 31b, die einen Förderabschnitt, nämlich eine Kurvenscheibe des Knetblocks 29 bilden, die eine Teilscheibe 31a gegenüber der benachbarten Teilscheibe 31b um 180° verdreht angeordnet. Damit streift der Kamm der Teilscheibe 31b die Bohrungswand ab, während zwischen dem Kamm der Teilscheibe 31a und der Bohrungswand ein Spalt a gebildet wird (vgl. Figur 2 und 3).

Gleiches gilt für die beiden Teilscheiben 38a und 38b des Knetblocks 30, welche gegenüber den Teilscheiben 31a und 31b des Knetblocks 29 um 180° versetzt angeordnet sind.

Das heißt, auch die Teilscheiben 38a und 38b des Knetblocks 30 sind gegenüber einander um 180° verdreht angeordnet. Wie in Figur 15 dargestellt, kann damit Material 39, das sich beim Betrieb des Extruders vor dem Kamm der Teilscheibe 38a ansammelt, entsprechend dem Pfeil 40 in den Spalt abfließen, der zwischen dem Kamm der Teilscheibe 38a und der Bohrungswand gebildet wird.

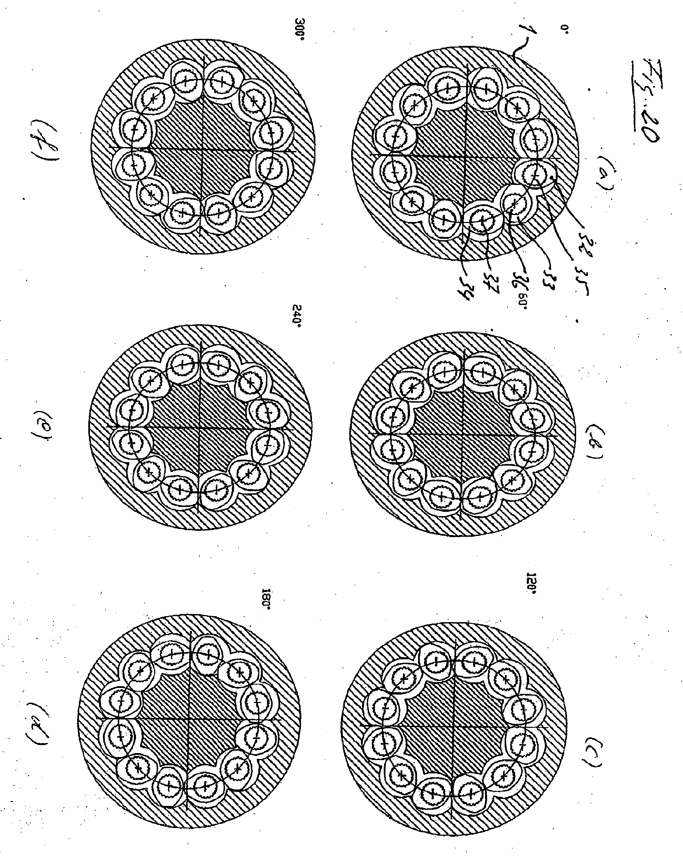

Gemäß Figur 20(a) bis (f) sind zwölf Förderelemente 32, 33, 34 auf achsparallelen Wellen 35, 36, 37... befestigt, die längs eines Kreises angeordnet sind, wobei sich die Förderelemente 31 bis 33 am ganzen Umfang gegenseitig angreifen. Dabel wird der Förderquerschnitt der Förderelemente 32, 33, 34... in gleicher Weise exzentrisch angeordnet, wie vorstehend anhand der Figuren 2 bis 4 im Einzelnen geschildert. Bei dieser Ausführungsform der Erfindung wird der Profilumschlag zwischen zwei benachbarten Wellen gegenüber einem Zweiwellen-Extruder annähernd verdoppelt.

**Patentansprüche**

1. Extruder mit einem Gehäuse (1) mit wenigstens zwei Förderwellen (2, 3) mit sich gegenseitig abstreifenden Förderquerschnitten, die gleichsinnig antreibbar in wenigstens zwei Gehäusebohrungen (11, 12) angeordnet sind, die zylindrisch oder konisch ausgebildet sind und deren Achsen parallel oder im Winkel zueinander angeordnet sind, wobei der Abstand (A) der Achsen der beiden Gehäusebohrungen (11, 12) voneinander größer als D/1,4142 ist, wobei D der Durchmesser der zylindrischen Bohrung oder der größte Durchmesser der konischen Bohrung ist, und wobei zwischen den Gehäusebohrungen (11, 12) und dem Außendurchmesser (DE) der Förderwellen (2, 3) ein Spiel (a') vorgesehen ist, **dadurch gekennzeichnet, dass** jede Förderwelle (2, 3) mehrere Förderabschnitte (29a bis 29d; 30a bis 30d) aufweist und die Förderabschnitte (29a bis 29d; 30a bis 30d) jeweils durch zwei Teilscheiben (31a, 31b, 38a, 38b) einer Kurvenscheibe (29a, 30a) gebildet werden, wobei die beiden Teilscheiben (31a, 31b, 38a, 38b) jeder Kurvenscheibe (29a, 30a) gegenüber einander um 180° an der jeweiligen Förderwelle (2, 3) verdreht angeordnet sind, wobei der Mittelpunkt (PM) des Querschnittsprofils jedes Förderabschnitts (29a bis 29d; 30a; 30d) gegenüber dem Mittelpunkt (BM) der Gehäusebohrung (11, 12) und dem Drehmittelpunkt (DM) der Förderwellen (2, 3) jeweils exzentrisch versetzt angeordnet ist, wobei der Mittelpunkt (PM) des Querschnittsprofils jeder Förderwelle (2, 3) durch den Schnittpunkt der beiden Spiegelebenen (x, y) des Querschnittsprofils der Förderwelle (2, 3) gebildet wird.

2. Extruder nach Anspruch 1, **dadurch gekennzeichnet, dass** die Exzentrizität (e), um die der Mittelpunkt (PM) des Querschnittsprofils jedes Förderabschnitts (17a, 17b, 18a, 18b, usw.) gegenüber dem Mittelpunkt (BM) der Gehäusebohrung (11, 12) und dem Drehmittelpunkt (DM) der Förderwelle (2, 3) jeweils versetzt ist, maximal (D-A)/4 beträgt.

3. Extruder nach Anspruch 1 oder 2, **dadurch gekennzeichnet, dass** der Mittelpunkt (PM) des Querschnittsprofils der Förderabschnitte (17a, 17b, 18a, 18b; 22a bis 22d; 23a bis 23d; 29a bis 29d.) gegenüber den beiden Spiegelebenen (x, y) jeweils um 45° versetzt ist.

4. Extruder nach einem der vorstehenden Ansprüche, **dadurch gekennzeichnet, dass** die Länge jedes Förderabschnitts maximal dem Bohrungsdurchmesser (D) entspricht.

5. Extruder nach einem der vorstehenden Ansprüche, **dadurch gekennzeichnet, dass** die Kämme der Förderwellen zu den Achsen der Gehäusebohrungen (11, 12) senkrecht oder schräg als Schnecken verlaufen.

6. Extruder nach Anspruch 4, **dadurch gekennzeichnet, dass** die Förderwellen (2, 3) zwischen zwei Förderabschnitten (17a bis 17d; 18a bis 18d; 22a bis 22d; 23a bis 23d) Barriereringe (20a bis c; 24a, 24b) aufweisen.

7. Extruder nach Anspruch 6, **dadurch gekennzeichnet, dass** die Barriereringe in unterschiedlichen Abständen zwischen den Förderabschnitten angeordnet sind.

8. Extruder nach Anspruch 6 oder 7, **dadurch gekennzeichnet, dass** der Durchmesser der Barriereringe (20a bis 20c; 24a, 24b) maximal dem Abstand (A) der Achsen der beiden Gehäusebohrungen (11, 12) entspricht.

9. Extruder nach einem der vorstehenden Ansprüche, **dadurch gekennzeichnet, dass** die Förderabschnitte (17a bis 17d, 18a bis 18d) durch Abschnitte eines einstückigen Förderelements (4, 5) gebildet sind.

10. Extruder nach einem der vorstehenden Ansprüche, **dadurch gekennzeichnet, dass** mindestens sechs längs eines Kreises mit gleichem Zentriwinkelabstand angeordnete Förderwellen (35, 36, 37 ...) vorgesehen sind.

## Claims

1. Extruder with a housing (1) having at least two conveyor shafts (2, 3) with two conveying cross-sections stripping each other which are arranged in at least two housing bores (11, 12) so as to be capable of being driven in the same direction, with said housing bores (11, 12) having a cylindrical or conical shape and the axes thereof being arranged parallel or at an angle to each other, wherein the distance (A) of the axes of the two housing bores (11, 12) from each other is greater than D/1,4142, wherein D is the diameter of the cylindrical bore or the greatest diameter of the conical bore, and wherein a clearance (a') is provided between the housing bores (11, 12) and the outer diameter (DE) of the conveyor shafts (2, 3), **characterized in that** each conveyor shaft (2, 3) has a plurality of conveying sections (29a to 29d; 30a to 30d) and the conveying sections (29a to 29d; 30a to 30d) are each formed by two dividing plates (31a, 31b, 38a, 38b) of a cam disk (29a, 30a), wherein the two dividing plates (31a, 31b, 38a, 38b) of each cam disk (29a, 30a) are arranged on the respective conveyor shaft (2, 3) such that they are rotated through 180 degrees in relation to each other, wherein the centre (PM) of the cross-sectional profile of each conveying section (29a to 29d; 30a to 30d) is eccentrically offset in relation to the centre (BM) of the housing bore (11, 12) and the centre of rotation (DM) of the conveyor shafts (2, 3), respectively, wherein the centre (PM) of the cross-sectional profile of each conveyor shaft (2, 3) is formed by the intersection point of the two planes of symmetry (x, y) of the cross-sectional profile of the conveyor shaft (2, 3).

2. Extruder according to claim 1, **characterized in that** the eccentricity (e) by which the centre (PM) of the cross-sectional profile of each conveying section (17a, 17b, 18a, 18b etc.) is offset in relation to the centre (BM) of the housing bore (11, 12) and the centre of rotation (DM) of the conveyor shaft (2, 3), respectively, is not more than (D-4)/4.

3. Extruder according to claim 1 or 2, **characterized in that** the centre (PM) of the cross-sectional profile of the conveying sections (17a, 17b; 18a, 18b; 22a to 22d; 23a to 23d; 29a to 29d) is in each case offset in relation to the two planes of symmetry (x, y) by 45 degrees.

4. Extruder according to any of the preceding claims, **characterized in that** the length of each conveying section corresponds at most to the diameter of the bore (D).

5. Extruder according to any of the preceding claims, **characterized in that** the combs of the conveyor shafts run perpendicularly or transversely to the axes of the housing bores (11, 12) in the form of screws.

6. Extruder according to claim 4, **characterized in that** the conveyor shafts (2, 3) have barrier rings (20a to 20c; 24a, 24b) between two conveying sections (17a to 17d; 18a to 18d; 22a to 22d; 23a to 23d).

7. Extruder according to claim 6, **characterized in that** the barrier rings are arranged at different distances between the conveying sections.

8. Extruder according to claim 6 or 7, **characterized in that** the diameter of the barrier rings (20a to 20c; 24a, 24b) corresponds at most to the distance (A) of the axes of the two housing bores (11, 12).

9. Extruder according to any of the preceding claims, **characterized in that** the conveying sections (17a to 17d; 18a to 18d) are formed by sections of a one-piece conveying element (4, 5).

10. Extruder according to any of the preceding claims, **characterized in that** at least six conveyor shafts (35, 36, 37 ...) arranged along a circle at the same central angle distance are provided.

## Revendications

1. Extrudeuse comportant un boîtier (1) présentant au moins deux arbres de transport (2, 3) avec des sections transversales de transport qui se raclent réciproquement, lesquels sont agencés dans au moins deux alésages de boîtier (11, 12) de manière à pouvoir être entraînés dans le même sens, alésages qui sont réalisés cylindriques ou coniques et dont les axes sont agencés en parallèle ou en angle l'un par rapport à l'autre, l'espacement (A) des axes des deux alésages de boîtier (11, 12) l'un par rapport à l'autre étant supérieur à D/1,4142, D étant le diamètre de l'alésage cylindrique ou le plus grand diamètre de l'alésage conique, et un jeu (a') étant prévu entre les alésages de boîtier (11, 12) et le diamètre extérieur (DE) des arbres de transport (2, 3), **caractérisée en ce que** chaque arbre de transport (2, 3) présente plusieurs tronçons de transport (29a à 29d ; 30a à 30d) et **en ce que** les tronçons de transport (29a à 29d ; 30a à 30d) sont chacun formés par deux disques partiels (31a, 31b, 38a, 38b) d'une came (29a, 30a), les deux disques partiels (31a, 31b, 38a, 38b) de chaque came (29a, 30a) étant agencés en étant tournés de 180° l'un par rapport à l'autre sur l'arbre de transport (2, 3) respectif, le centre (PM) du profil de section transversale de chaque tronçon de transport (29a à 29d ; 30a ; 30d) étant agencé avec décalage excentrique respectif vis-à-vis du centre (BM) de l'alésage de boîtier (11, 12) et du centre de rotation (DM) des arbres de transport (2, 3), le centre (PM) du profil de section transversale de chaque arbre de transport (2, 3) étant formé par le point d'intersection des deux plans de symétrie (x, y) du profil de section transversale de l'arbre de transport (2, 3).

2. Extrudeuse selon la revendication 1, **caractérisée en ce que** l'excentricité (3) avec laquelle le centre (PM) du profil de section transversale de chaque tronçon de transport (17a, 17b, 18a, 18b, etc.) est respectivement décalé par rapport au centre (BM) de l'alésage de boîtier (11, 12) et par rapport au centre de rotation (DM) de l'arbre de transport (2, 3), est au maximum (D-A)/4.

3. Extrudeuse selon la revendication 1 ou 2, **caractérisée en ce que** le centre (PM) du profil de section transversale des tronçons de transport (17a, 17b, 18a, 18b ; 22a à 22d ; 23a à 23d ; 29a à 29d) est décalé respectivement de 45° par rapport aux deux plans de symétrie (x, y).

4. Extrudeuse selon l'une des revendications précédentes, **caractérisée en ce que** la longueur de chaque tronçon de transport correspond au maximum au diamètre d'alésage (D).

5. Extrudeuse selon l'une des revendications précédentes, **caractérisée en ce que** les dents des arbres de transport s'étendent perpendiculairement aux axes des alésages de boîtier (11, 12) ou en biais sous forme de vis sans fin.

6. Extrudeuse selon la revendication 4, **caractérisée en ce que** les arbres de transport (2, 3) présentent des bagues de barrière (20a à c ; 24a, 24b) entre deux tronçons de transport (17a à 17d ; 18a à 18d ; 23a à 23d).

7. Extrudeuse selon la revendication 6, **caractérisée en ce que** les bagues de barrière sont agencées à des espacements différents entre les tronçons de transport.

8. Extrudeuse selon la revendication 6 ou 7, **caractérisée en ce que** le diamètre des bagues de barrière (20a à 20c ; 24a, 24b) correspond au maximum à l'espacement (A) des axes des deux alésages de boîtier (11, 12).

9. Extrudeuse selon l'une des revendications précédentes, **caractérisée en ce que** les tronçons de transport (17a à 17d, 18a à 18d) sont formés par des tronçons d'un élément de transport (4, 5) d'une seule pièce.

10. Extrudeuse selon l'une des revendications précédentes, **caractérisée en ce qu'**il est prévu au moins six arbres de transport (35, 36, 37...) agencés le long d'un cercle avec le même espacement d'angle au centre.

Fig.1

Fig.2

Fig.3

Fig. 4

Fig. 5

Fig. 6

Fig. 7

Fig. 8

Fig. 9

(a)  (b)  (c)  (d)

Fig. 14

Fig. 12

(a) A-A

(b) B-B

(c) C-C

(d) D-D

Fig. 11

Fig. 13

Fig. 10

Fig. 17

Fig. 16

Fig. 18

Fig. 19

Fig. 15

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008029305 A1
- DE 102004010553 A1
- DE 102008016862 A1
- US 4824256 A
- CA 2728438 A1
- US 2005041521 A1

**In der Beschreibung aufgeführte Nicht-Patentliteratur**

- **KLEMENS KOHLGRÜBER.** Der gleichläufige Doppelschneckenextruder. Carl Hanser Verlag, 2007, 102